**Europäisches Patentamt**

**European Patent Office**

**Office européen des brevets**

(19)

(11) Veröffentlichungsnummer : **0 423 531 B1**

(12) **EUROPÄISCHE PATENTSCHRIFT**

(45) Veröffentlichungstag der Patentschrift :
21.07.93 Patentblatt 93/29

(51) Int. Cl.⁵ : **B01J 29/04, C01B 35/12**

(21) Anmeldenummer : **90118807.8**

(22) Anmeldetag : **01.10.90**

(54) **Verfahren zur Herstellung von formselektiven Katalysatoren mit hoher Langzeitstabilität.**

(30) Priorität : **16.10.89 DD 333614**

(43) Veröffentlichungstag der Anmeldung :
**24.04.91 Patentblatt 91/17**

(45) Bekanntmachung des Hinweises auf die
Patenterteilung :
**21.07.93 Patentblatt 93/29**

(84) Benannte Vertragsstaaten :
**AT BE CH DE DK ES FR GB GR IT LI LU NL SE**

(56) Entgegenhaltungen :
**EP-A- 0 113 473**
**CA-A- 1 197 498**
**FR-A- 2 367 701**
**US-A- 3 328 119**

(73) Patentinhaber : **VAW Aluminium AG**
**Georg-von-Boeselager-Strasse 25**
**W-5300 Bonn 1 (DE)**
Patentinhaber : **LEUNA-WERKE AG**
**Thälmann-Platz**
**O-4220 Leuna 3 (DE)**

(72) Erfinder : **Becker, Karl, Dr.**
**August-Bebel-Strasse 2**
**O-4807 Bad Kösen (DE)**
Erfinder : **Unger, Baldur, Dr.**
**Saalfelder Strasse 130**
**O-6421 Reichmannsdorf (DE)**
Erfinder : **Thome, Roland, Dr.**
**Brüsseler Strasse 58**
**W-5300 Bonn 1 (DE)**
Erfinder : **Tissler, Arno, Dr.**
**Koernicke Strasse 2**
**W-5300 Bonn 1 (DE)**
Erfinder : **Bergk, Karl-Heinz, Prof. Dr.**
**Friedrich-Ebert-Strasse 77**
**O-04850 Weissenfels (DE)**
Erfinder : **Reschetilowski, Wladimir, Dr.**
**Hohe Strasse 36**
**O-07010 Leipzig (DE)**

(74) Vertreter : **Müller-Wolff, Thomas, Dipl.-Ing.**
**VAW aluminium AG**
**Georg-von-Boeselager-Strasse 25 Postfach 2468**
**W-5300 Bonn 1 (DE)**

## Beschreibung

Die Erfindung betrifft ein Verfahren zur Herstellung von formselektiven Katalysatoren mit hoher Langzeitstabilität, wobei ein unter hydrothermalen Bedingungen und ohne Zusatz einer organischen oder Stickstoffverbindung hergestelltes borhaltiges Alumosilikat mit einem Molverhältnis B/Al = 0,01 - 3,0 verwendet wird.

Aus US-PS 3.328.119 ist ein Verfahren zur Herstellung von borhaltigen Alumosilikaten bekannt, bei dem ein Verhältnis von B/Al = 0,01 bis 0,5 und ein Verhältnis von $SiO_2/Al_2O_3 + B_2O_3$ von 1,5 bis 12 angegeben ist. Diese borhaltigen Silikate gehören damit zu den klassischen Zeolithtypen wie Faujasite, Mordenite bzw. Zeolith A. Bekanntermaßen sind die klassischen Zeolithe in ihrer katalytischen Aktivität in säurekatalysierten Reaktionen jedoch instabiler als z. B. Zeolithe mit Pentasilstruktur, wie ZSM-5 oder ZSM-11.

Derartige Zeolithe werden als wirksame Katalysatoren bzw. Katalysatorkomponenten für die nichtoxydative Umwandlung von Kohlenwasserstoffen sowie von sauerstoff- und anderen heteroatomfunktionalisierten organischen Verbindungen beschrieben. Es ist bekannt, daß sie für die Umwandlung von Methanol oder Dimethylether zu Kohlenwasserstoffen im VK-Siedebereich bzw. zu niederen Alkenen (US-PS 3.333.250), zur spaltenden Bearbeitung von höhersiedenden Kohlenwasserstofffraktionen (US-PS 3.758.403), zur Isomerisie-rung von $C_8$-Aromaten (z.B. US-PS 4.224.141)), zur paraselektiven Alkylierung (US-PS 4.097.543) oder Disproportionierung von Toluen (US-PS 4.052.476), zur Umsetzung von Alkoholen oder Ethern zu Aminen (z.B. US-PS 4.082.805) sowie für viele andere spezielle Reaktionen angewandt werden können. Ausgehend von der Tatsache, daß die katalytische Wirksamkeit der genannten Zeolithtypen im allgemeinen auf die Existenz von Brönsted-Zentren im Zeolithgitter zurückgeführt wird, die wiederum auf die Anwesenheit von Gitteraluminiumatomen beruht, ergibt sich, daß der optimale Verlauf einer Reaktion ein definiertes Si/Al-Molverhältnis im Gitter erfordert. Dieses liegt bekanntermaßen für die Umwandlung von Methanol zu flüssigen Kohlenwasserstoffen an Zeolithen des ZSM-5-Typs im Bereich von 30 bis 70, für die Umwandlung von Methanol zu Alkenen im Bereich von 70 bis 120. Die Einstellung derartiger Si/Al-Molverhältnisse läßt sich relativ unkompliziert realisieren, wenn man den zur hydrothermalen Kristallisation verwendeten Alumosilikathydrogelen eine oder mehrere strukturdirigierende organische Substanzen, sogenannte Template-Verbindungen, wie z.B. quarternäre Alkylammoniumsalze, Amine, Alkohole u.a. zusetzt (US-PS 3.702.886, US-PS 3.941.871, US-PS 4.112.056, DE-OS 2.442.240, DE-OS 2.817.576, DE-OS 2.913.552). Nachteilig bei diesen Synthesevarianten unter Zusatz von Template-Verbindungen ist der hohe technische und ökonomische Aufwand zur Rückgewinnung nichtumgesetzten Templates sowie das unumgängliche Abbrennen von im Zeolithgefüge eingebauten organischen Substanzen, das einerseits einen hohen Aufwand zur Entsorgung erfordert, andererseits zu mitunter erheblichen irreversiblen Schädigungen am Zeolith selbst führt.

Als Alternative dazu sind Verfahren zur Kristallisation von Pentasilzeolithen bekannt, die auf den Einsatz organischer Template-Verbindungen verzichten (DE-OS 3.242.352, DD-PS 207.186). Der Nachteil dieser Verfahren besteht jedoch darin, daß im Ergebnis der Synthese nur Produkte mit einem Si/Al-Molverhältnis im Gitter von maximal 25 zugänglich sind. In vielen katalytischen Umwandlungen zeigen Katalysatoren auf der Basis Template-frei hergestellter Pentasilzeolithe aufgrund dieses geringen Si/Al-Molverhältnisses im Gitter eine verstärkte Neigung zum Verkoken und damit eine relativ geringe Standzeit.

Ebenfalls bekannt sind Verfahren zur Herstellung strukturgleicher Borosilikate (BE 880.858, DE-OS 3.316.488) sowie auch Verfahren, bei denen die entstandenen borhaltigen Produkte einer nachfolgenden Temperung in Anwesenheit von Wasserdampf (US-PS 4.620.921) oder borextrahierenden Behandlung unterzogen wurden (EP 169.026). Die genannten Verfahren beruhen jedoch auf der Anwendung organischer Template-Verbindungen mit den oben bereits erwähnten Nachteilen bzw. sind mit nur erheblichen Zusatzaufwendungen durchführbar.

Ziel der Erfindung ist ein flexibles, kostengünstiges und umweltfreundliches Verfahren zur Herstellung von formselektiven Katalysatoren bzw. Katalysatorkomponenten, die sich vorteilhaft in Prozessen der selektiven Umwandlung von organischen Substanzen einsetzen lassen.

Der Erfindung liegt die Aufgabe zugrunde, ein kostengünstiges und umweltfreundliches Verfahren zur Herstellung von formselektiven Katalysatoren, die sich vorteilhaft in Prozessen der selektiven Umwandlung von organischen Verbindungen mit hoher Langzeitstabilität einsetzen lassen, zu entwickeln.

Erfindungsgemäß wird die Aufgabe gelöst, indem ein aus der hydrothermalen Behandlung bei 403 bis 593 K erhaltenes synthetisches kristallines Borosilikat mit Pentasilstruktur und einer Zusammensetzung in dehydratisierter Form von 0,01 bis 1,0 $Na_2O \cdot 1,0 (Al_2O_3 + B_2O_3) \cdot 12$ bis 50 $SiO_2$ mit einer anorganischen Säure oder Ammoniumsalzlösung behandelt, filtriert, getrocknet, gemahlen und anschließend in wasserdampf- oder alkohlhaltiger Atmosphäre bei Temperaturen von 373 K bis 1073 K getempert und nach Abkühlung unter Zusatz eines Formungsmittels und gegebenenfalls unter Zugabe eines Verformungsmittels zu Katalysatorforköpern verarbeitet oder unter Zusatz eines Formungsmittels und gegebenenfalls unter Zugabe eines Verformungsmittels zu Katalysatorformkörpern verarbeitet und anschließend in wasserdampf- bzw. alkoholhaltiger Atmosphäre bei Temperaturen von 373 K bis 1073 K getempert wird.

Überraschend war, daß die erfindungsgemäß behandelten Produkte eine hohe Stabilität bei der Umwandlung von organischen Substanzen aufweisen.

Als anorganische Säure zur Behandlung der Syntheseprodukte eignen sich insbesondere Salpeter-, Schwefel- oder Salzsäure, als Ammoniumsalze insbesondere Ammoniumnitrat, -sulfat, -chlorid, -karbonat oder -hydroxid. Die Behandlung wird bei Temperaturen von 293 K bis 373 K, vorzugsweise bei 353 K, einer Konzentration der Säure bzw. Ammoniumsalzlösung vor 0,1 n bis 3 n, vorzugsweise 0,5 n und einem Feststoff zu Flüssigkeit-Verhältnis vorzugsweise von 1 zu 10 durchgeführt.

Die Formung des Zeolithpulvers kann unter Zusatz z.B. von Pseudoböhmit, alkaliarmen Kieselsäuresolen, Fällungskieselsäuren, Schichtsilikaten sowie Tonen nach den bekannten Verfahrensweisen erfolgen. Als Verformungsmittel können gegebenenfalls wasserlösliche Zelluloseether sowie Additive auf Mineralölbasis eingesetzt werden. Die Behandlung in wasserdampf- bzw. alkohol-, vorzugsweise methanolhaltiger Atmosphäre wird bevorzugt bei Temperaturen zwischen 573 K und 873 K über einen Zeitraum von 15 Minuten bis 24 Stunden am Zeolithpulver oder auch an den Katalysatorformkörpern durchgeführt.

## Ausführungsbeispiele

Es bedeuten Ma.-% Masseanteile in Prozent.

## Katalysator A

50 g eines gemäß DD 207.186 hergestellten Pentasilzeoliths mit einer Zusammensetzung von $Na_2O * Al_2O_3 * 30,2\ SiO_2$ (dehydratisierte Form) wurde feingemahlen und zweimal jeweils für 3 Stunden in 3 l einer 0,5 n Ammoniumnitratlösung bei 363 K gerührt, filtriert und nitratfrei gewaschen. Das Si/Al-Molverhältnis betrug nach dieser Behandlung 15,2 und der Natriumgehalt lag bei 0,05 Ma.-% $Na_2O$. Der Filterkuchen wurde einem speziell vorbereiteten Böhmithydrosol zugemischt und auf bekannte Weise zu Tropfkugeln geformt. Das Masseverhältnis der Feststoffgehalte von Zeolithkomponente zu Aluminiumoxid betrug 70 zu 30. Die Tropfkugeln wurden anschließend 3 Stunden bei 773 K getempert.

## Katalysator B

Die Synthese der dem Katalysator zugrundeliegenden Boroalumosilikatkomponente erfolgt durch hydrothermale Kristallisation in einer aus folgenden Komponenten zusammengesetzten Reaktionsmischung:

1550 ml   Kieselsäuresol        (339 g/l $SiO_2$)
86 ml     Natriumaluminatlösung       (257 g/l $Al_2O_3$, 235 g/l $Na_2O$)
43,9 g    Natriumhydroxid
27,1 g    Borsäure
3360 ml   Wasser

bei 448 K und einer Kristallisationszeit von 48 Stunden ohne Zusatz einer als Template wirkenden organischen Verbindung. Das Syntheseprodukt wurde filtriert, gewaschen und getrocknet. Röntgendiffraktometrische Untersuchungen ergaben keine auffälligen Unterschiede bezüglich Reflexlage und -intensität in den Diffraktogrammen der Produkte entsprechend der Beispiele A und B.

Der Boroalumosilikatprobe gemäß Beispiel B konnte folgende Zusammensetzung (in dehydratisierter Form) zugeordnet werden: $0,52\ Na_2O * 0,58\ Al_2O_3 * 0,42\ B_2O_3 * 30\ SiO_2$. 50 g dieser Probe wurden feingemahlen und analog zum Beispiel A einer zweimaligen Behandlung mit Ammoniumnitratlösung unterworfen. Das Si/Al-Molverhältnis betrug nach dieser Behandlung 26,2 und der Natriumgehalt 0,03 Ma.-% $Na_2O$. Die Weiterverarbeitung zu Katalysatorformlingen erfolgte in gleicher Weise wie bei Katalysator A.

## Katalysator C

50 g der Zeolithkomponente, deren Herstellung und Vorbehandlung unter B beschrieben ist, wurden einer sechsstündigen Temperaturbehandlung bei einer Temperatur von 773 K in ruhender Luft und einer Schütthöhe an Zeolithpulver von 3 cm ausgesetzt. Das so behandelte Boroalumosilikatpulver wurde in gleicher Weise, wie unter A beschrieben, zu Katalysatorformlingen weiterverarbeitet.

## Katalysator D

50 g der Zeolithkomponente, deren Herstellung und Vorbehandlung unter B beschrieben ist, wurden in einem elektrisch beheiztem Strömungsrohr bei einer Temperatur von 673 K 5 Stunden mit reinem Methanoldampf, anschließend 6 Stunden bei 873 K mit Luft behandelt und nachfolgend, wie unter A beschrieben, zu Katalysatorformlingen weiterverarbeitet.

**Katalysator E**

70 g der Katalysatorformlinge entsprechend B wurden in einem elektrisch beheizten Strömungsrohr 5 Stunden bei 673 K mit reinem Methanoldampf behandelt und anschließend 6 Stunden bei 873 K im Luftstrom getempert.

**Katalysator F**

50 g der Zeolithkomponente, deren Herstellung und Vorbehandlung unter B beschrieben ist, wurde in ein frisch bereitetes, praktisch alkalifreies Kieselsäuresol (5 Ma.-% $SiO_2$)) gegeben und 1 Stunde intensiv gerührt. Danach wurde das Gemisch 24 Stunden bei 393 K getrocknet und schließlich bei 773 K getempert. Das Massenverhältnis der Feststoffe Zeolith zu Siliziumdioxid betrug 70 zu 30. Der Katalysator wurde mechanisch zerkleinert, eine Kornfraktion im Bereich von 1 mm - 2 mm abgetrennt und diese einer fünfstündigen Behandlung mit Methanoldampf bei 673 K mit nachfolgendem sechsstündigen Tempern bei 873 K im Luftstrom ausgesetzt.

Die in oben aufgeführter Weise hergestellten Katalysatoren A bis F wurden bezüglich ihrer katalytischen Wirksamkeit in verschiedenen Reaktionen zur Umwandlung von organischen Verbindungen untersucht:

**1. Spaltung von n-Hexan unter Normaldruck:**

500 mg der Katalysatorprobe, die durch mechanische Zerkleinerung und Siebung in eine Kornfraktion von 0,315 mm - 0,45 mm überführt worden war, wurde in einer Labordurchflußapparatur bei 753 K für eine Dauer von 1 Stunde im trockenen Wasserstoffstrom aktiviert und anschließend ein bei 283 K mit n-Hexan gesättigter Wasserstoffstrom (Belastung: 1,2 g/gh) übergeleitet. Die Analyse der Reaktionsprodukte erfolgte gaschromatographisch in Abhängigkeit von der Reaktionsdauer.

Die Auswertung erfolgte anhand der untenstehenden Desaktivierungsgleichung:

$1/k = 1/k_o + B * t$, wobei

$k$ = aktuelle Reaktionsgeschwindigkeitskonstante,

$k_o$ = Reaktionsgeschwindigkeitskonstante bei t = o,

$t$ = Reaktionsdauer und

$B$ = Desaktivierungsfaktor darstellen.

Als Maß für die katalytische Aktivität wurde ein an den von WEISZ u.a. eingeführten $\alpha$-Wert (P.B. WEISZ u. J.N. MIALE, J. Catalysis 4 [(1965)527] angelehnter Parameter $\alpha$' als Maß für die Standzeit der Desaktivierungsfaktor B aus obiger Gleichung herangezogen.

**2. Methanolumwandlung**

35 g der Katalysatorformlinge wurden bei 593 K, einem Druck von 3 MPa und einer Belastung von 1,5 g/gh in einem Technikumsdruckreaktor zur Umwandlung von Methanol zu vorwiegend flüssigen Kohlenwasserstoffen eingesetzt. Als Maß für die Standzeit der Katalysatorproben diente die Reaktionsdauer bis zum Durchbruch des Methanols durch die Katalysatorschüttung.

Die Ergebnisse der Testreaktionen sind in der Tabelle 1 zusammengestellt:

EP 0 423 531 B1

**Tabelle 1:**

| Katalysator | $\alpha',673$ [1] | B,rel. [2] | Standzeit, h |
|---|---|---|---|
| A | 250 | 0,4 | 24 |
| B | 190 | 0,2 | 80 |
| C (erfindungsgemäß) | 180 | 0,08 | 135 |
| D (erfindungsgemäß) | 160 | 0,075 | 160 |
| E (erfindungsgemäß) | 170 | 0,09 | 120 |
| F (erfindungsgemäß) | 160 | 0,08 | 140 |

[1] Der $\alpha'$-Wert wurde wie in der oben genannten Literaturstelle bestimmt mit dem Unterschied, daß die Reaktionstemperatur nicht 811 K, sondern 673 K betrug.

[2] B,rel. stellt einen Relativwert des Desaktivierungsfaktors der untersuchten Beispielkatalysatoren bezüglich des Desaktivierungsfaktors eines technischen ZSM-5-haltigen Katalysators dar.

**Patentansprüche**

1. Verfahren zur Herstellung von formselektiven Katalysatoren mit hoher Langzeitstabilität, wobei ein unter hydrothermalen Bedingungen und ohne Zusatz einer organischen oder Stickstotfverbindung hergestelltes borhaltiges Alumosililat mit einem Molverhältnis B/Al = 0,01 - 3,0 verwendet wird, dadurch gekennzeichnet, daß ein aus der hydrothermalen Behandlung bei 403 bis 593 K erhaltenes synthetisches Kristallines Borosililat mit Pentasilstruktur und einer Zusammensetzung in dehydratisierter Form von 0,01 bis 1,0 $Na_2O \cdot 1,0(Al_2O_3 + B_2O_3) \cdot 12$ bis 50 $SiO_2$ mit einer anorganischen Säure oder Ammoniumsalzlösung behandelt, filtriert, getrocknet, gemahlen und anschließend in wasserdampf- oder alkoholhaltiger Atmosphäre bei Temperaturen von 373 K bis 1073 getempert und nach Abkühlung unter Zusatz eines Formungsmittels und gegebenenfalls unter Zugabe eines Verformungsmittels zu Katalysatorformkörpern verarbeitet oder unter Zusatz eines Formungsmittels und gegebenenfalls unter Zugabe eines Verformungsmittels zu Katalysatorformkörpern verarbeitet und anschliessend in wasserdampf- bzw. alkoholhaltiger Atmosphäre bei Temperaturen von 373 K bis 1073 getempert wird.

2. Verfahren nach Anspruch 1, gekennzeichnet dadurch, daß als anorganische Säure Salpeter-, Schwefeloder Salzsäure, als Ammoniumsalz Ammoniumnitrat, -sulfat, -chlorid, -karbonat, -hydrogenkarbonat und -hydroxid eingesetzt wird.

3. Verfahren nach Anspruch 1 oder 2, gekennzeichnet dadurch, daß die Behandlung mit Säure bzw. Ammoniumsalzlösung bei Temperaturen von 293 K bis 373 K, einer Konzentration der Säure bzw. Ammoniumsalzlösung von 0,1 n bis 3 n, und einem Feststoff zu Flüssigkeit-Verhältnis von 1 zu 1 bis 1 zu 20 durchgeführt wird.

4. Verfahren nach einem der Ansprüche 1 bis 3, gekennzeichnet dadurch, daß die Behandlung mit Säure oder Ammoniumsalzlösung bei 353 K mit einer 0,5 n Lösung und einem Feststoff zu Flüssigkeit-Verhältnis von 1 zu 10 durchgeführt wird.

5

**5.** Verfahren nach einem der Ansprüche 1 bis 4, gekennzeichnet dadurch, daß die Behandlung in wasserdampf- und/oder alkoholhaltiger Atmosphäre bei Temperaturen zwischen 373 K und 1073 K über eine Dauer von 15 Minuten bis 24 Stunden durchgeführt wird.

**6.** Verfahren nach einem der Ansprüche 1 bis 5, gekennzeichnet dadurch, daß die Behandlung in alkoholhaltiger Atmosphäre unter Verwendung von Methanol durchgeführt wird.

**7.** Verfahren nach einem der Ansprüche 1 bis 6, gekennzeichnet dadurch, daß nach der Behandlung in alkoholhaltiger Atmosphäre eine Nachtemperung in Luft bzw. inerter Atmosphäre bei einer Temperatur von 673 K bis 1073 K über eine Dauer von 0,5 Stunden bis 24 Stunden erfolgt.

**8.** Verfahren nach einem der Ansprüche 1 bis 7, gekennzeichnet dadurch, daß die Katalysatorformung unter Verwendung von Pseudoböhmit, alkaliarmen Kieselsolen, Fällungskieselsäuren, Schichtsilikaten oder Tonen als Formungsmittel erfolgt.

**9.** Verfahren nach einem der Ansprüche 1 bis 8, gekennzeichnet dadurch, daß der Anteil der Zeolithkomponente im Katalysator 10 Ma.-% bis 90 Ma.-% und der Anteil an Formungsmittel 10 Ma.-% bis 90 Ma.-% beträgt.

**10.** Verfahren nach einem der Patentansprüche 1 bis 9, dadurch gekennzeichnet, daß als Verformungsmittel wasserlösliche Zelluloseether sowie Additive auf Mineralölbasis verwendet werden.

**11.** Verwendung eines gemäß einem der vorhergehenden Ansprüche hergestellten Katalysators in heterogen-säurekatalysierten Verfahren.

## Claims

**1.** A process for the preparation of shape selective catalysts which are very stable over the long term, wherein a boron-containing aluminosilicate with a molar ratio of B/Al of 0.01 - 3.0 prepared under hydrothermal conditions and without the addition of an organic or nitrogen compound is used, characterised in that a synthetic crystalline borosilicate with a pentasil structure and a composition in the dehydrated form of 0.01 to 1.0 $Na_2O \cdot 1.0$ $(Al_2O_3 + B_2O_3) \cdot$ 12 to 50 $SiO_2$ obtained by hydrothermal treatment at 403 to 593 K, is treated with an inorganic acid or ammonium salt solution, filtered, dried, milled and then annealed at temperatures of 373 K to 1073 K in an atmosphere which contains water vapour or alcohol and processed after cooling with the addition of a shaping agent and optionally with the addition of a moulding agent to give catalyst moulded parts or processed with the addition of a shaping agent and optionally with the addition of a moulding agent to give catalyst moulded parts and then annealed at temperatures of 373 K to 1073 K in an atmosphere which contains water vapour or alcohol.

**2.** A process according to Claim 1, characterised in that nitric acid, sulphuric acid or hydrochloric acid is used as an inorganic acid and ammonium nitrate, sulphate, chloride, carbonate, hydrogen carbonate and hydroxide is used as an ammonium salt.

**3.** A process according to Claim 1 or 2, characterised in that the treatment with acid or ammonium salt solution is performed at temperatures of 293 K to 373 K, at a concentration of acid or ammonium salt of 0.1 N to 3.0 N and with a solid to liquid ratio of 1 to 1 to 1 to 20.

**4.** A process according to one of Claims 1 to 3, characterised in that the treatment with acid or ammonium salt solution is performed at 353 K with a 0.5 N solution and a solid to liquid ratio of 1 to 10.

**5.** A process according to one of Claims 1 to 4, characterised in that the treatment in an atmosphere which contains water vapour or alcohol is performed at temperatures between 373 K and 1073 K for a period of 15 minutes to 24 hours.

**6.** A process according to one of Claims 1 to 5, characterised in that the treatment in an atmosphere which contains alcohol is performed using methanol.

**7.** A process according to one of Claims 1 to 6, characterised in that after treatment in an atmosphere which contains an alcohol, an after-annealing takes place in air or an inert atmosphere at a temperature of 673 K to 1073 K for a period of 0.5 hours to 24 hours.

8. A process according to one of Claims 1 to 7, characterised in that the catalyst moulding takes place using pseudo boehmite, low-alkali silica sols, precipitated silicas, sheet silicates or clays as shaping agent.

9. A process according to one of Claims 1 to 8, characterised in that the proportion of zeolite component in the catalyst is 10 Ma% to 90 Ma% and the proportion of shaping agent is 10 Ma% to 90 Ma%.

10. A process according to one of patent Claims 1 to 9, characterised in that water-soluble cellulose ether or additives based on mineral oil are used as moulding agent.

11. Use of a catalyst prepared in accordance with one of the previous Claims in heterogeneous acid-catalysed processes.

## Revendications

1. Procédé de préparation de catalyseurs sélectifs quant à la forme ayant une grande stabilité dans le temps, en utilisant un alumino-silicate contenant du bore préparé dans des conditions hydrothermiques et sans addition de composé organique ou de composé d'azote avec une proportion molaire B/Al = 0,01 - 3,0 caractérisé en ce qu'on traite un borosilicate synthétique cristallin à structure pentasil obtenu par traitement hydrothermique entre 403 et 593 K et avec une composition sous forme déshydratée de 0,01 à 1,0 $Na_2O$ . 1,0 $(Al_2O_3 + B_2O_3)$ . 12 à 50 $SiO_2$, par un acide minéral ou une solution de sel d'ammonium, en filtrant, en séchant et broyant et ensuite on traite thermiquement dans une atmosphère contenant de la vapeur d'eau ou de l'alcool entre autre à des températures comprises entre 373 K et 1073 K et après refroidissement on transforme en catalyseur moulé en ajoutant un agent de mise en forme et le cas échéant en ajoutant un agent de déformation ou en ajoutant un agent de mise en forme et le cas échéant en ajoutant un agent de déformation, on transforme en catalyseur moulé et ensuite on traite dans une atmosphère contenant de la vapeur d'eau ou de l'alcool à des températures comprises entre 373 K et 1073 K.

2. Procédé selon la revendication 1, caractérisé en ce qu'on utilise comme acides minéraux de l'acide nitrique, sulfurique ou chlorhydrique et comme sel d'ammonium du sulfate, nitrate, chlorure, carbonate, hydrogénocarbonate et hydroxyde d'ammonium.

3. Procédé selon la revendication 1 ou 2, caractérisé en ce qu'on réalise le traitement avec l'acide ou la solution de sel d'ammonium à des températures de 293 K à 373 K, à une concentration d'acide ou de solution de sel d'ammonium comprise entre 0,1 N et 3 N et avec une proportion de solide ou liquide de 1 à 1 jusqu'à 1 à 20.

4. Procédé selon l'une des revendications 1 à 3, caractérisé en ce qu'on réalise le traitement par l'acide ou la solution de sel d'ammonium à 353 K avec une solution 0,5 N et une proportion solide-liquide de 1 à 10.

5. Procédé selon l'une des revendications 1 à 4, caractérisé en ce que le traitement en atmosphère contenant de la vapeur d'eau ou de l'alcool à des températures comprises entre 373 K et 1073 K est réalisé sur une durée de 15 minutes à 24 heures.

6. Procédé selon l'une des revendications 1 à 5, caractérisé en ce que le traitement en atmosphère contenant de l'alcool est réalisé en utilisant du méthanol.

7. Procédé selon l'une des revendications 1 à 6, caractérisé en ce qu'après le traitement dans une atmosphère contenant de l'alcool, on réalise un post-traitement dans l'air ou dans une atmosphère inerte à une température comprise entre 673 K et 1073 K sur une durée comprise entre 0,5 heure et 24 heures.

8. Procédé selon l'une des revendications 1 à 7, caractérisé en ce que le moulage du catalyseur est fait en utilisant de la pseudobõhmite, des sels de silice pauvres en alcalins, des silices précipitées, des silicates feuilletés ou des argiles comme agents de mise en forme.

9. Procédé selon l'une des revendications 1 à 8, caractérisé en ce que la proportion de composant zéolithe dans le catalyseur représente 10 Ma.% à 90 Ma.% et la proportion d'agent de mise en forme représente 10 Ma.% à 90 Ma.%.

10. Procédé selon l'une des revendications 1 à 9, caractérisé en ce qu'on utilise comme agent de déformation des éthers de cellulose hydrosolubles ainsi que des additifs à base d'huile minérale.

11. Utilisation d'un catalyseur préparé selon l'une des revendications précédentes dans un procédé de catalyse acide hétérogène.